Europäisches Patentamt

European Patent Office

Office européen des brevets

(11) Numéro de publication : **0 086 702**
**B1**

# (12) FASCICULE DE BREVET EUROPÉEN

(45) Date de publication du fascicule du brevet :
07.08.85

(21) Numéro de dépôt : 83400255.2

(22) Date de dépôt : 07.02.83

(51) Int. Cl.⁴ : **B 05 C  5/02**, B 05 C  9/08,
B 05 C  13/00

(54) **Machine à déposer un cordon de matière plastique ou analogue sur une surface sensiblement plane.**

(30) Priorité : 09.02.82 FR 8202106

(43) Date de publication de la demande :
24.08.83 Bulletin 83/34

(45) Mention de la délivrance du brevet :
07.08.85 Bulletin 85/32

(84) Etats contractants désignés :
DE GB IT

(56) Documents cités :
DE-A- 1 805 131
DE-A- 2 936 396
FR-A- 2 319 430
FR-A- 2 475 941

(73) Titulaire : REGIE NATIONALE DES USINES RENAULT
Boîte postale 103 8-10 avenue Emile Zola
F-92109 Boulogne-Billancourt (FR)

(72) Inventeur : Alheritiere, Jean
Chemin du Paradis
F-91430 Igny (FR)

(74) Mandataire : Srour, Elie et al
REGIE NATIONALE DES USINES RENAULT (S. 0804)
8 & 10 Avenue Emile Zola
F-92109 Boulogne Billancourt (FR)

Jouve, 18, rue St-Denis, 75001 Paris, France

## Description

L'invention se rapporte aux machines à déposer au moins un cordon de matière plastique ou analogue sur une surface sensiblement plane d'une pièce, en particulier pour la confection de joints d'étanchéité ou d'assemblage avec une autre pièce.

On connaît de telles machines dans lesquelles sont utilisés des pompes et pistolets du commerce pouvant extruder un cordon de matière plastique de diamètre choisi à une vitesse donnée, devant être en harmonie avec le déplacement relatif prévu entre le pistolet et la pièce pour déposer le cordon voulu, qui doit l'être en outre suivant une trajectoire donnée sur la pièce.·

Dans les machines connues, c'est généralement le ou les pistolets qui sont montés sur un système de commande à deux axes orthogonaux (en X et Y) dont les moteurs obéissent à une servo-commande programmée ou de recopiage d'un modèle, tandis que chaque pièce à traiter est fixée sur un montage d'immobilisation en position donnée.

Dans certaines machines, l'animation du ou des pistolets suivant les axes X et Y est provoquée à l'aide de jeux de cames spéciales pour le travail à effectuer, ou à l'aide de gabarits et galets suiveurs complexes.

Dans le cas de cordons circulaires, on a déjà proposé la rotation de la pièce comme étant plus simple et avantageuse à assurer que celle du ou des pistolets, qui constituent autrement avec leur commande de déplacement multiaxes un système complexe et lourd à manœuvrer, ce qui est à la fois un inconvénient du point de vue coût, encombrement, poids et rapidité de manœuvre, cette dernière se trouvant inadaptée à des cadences rapides de montage ou de défilement des pièces à traiter.

Le brevet FR-A-2 475 941 décrit une machine du type énoncé dans le préambule de la revendication 1 dans laquelle la pièce à traiter est supportée par un montage d'adaptation sur une table tournante d'axe de rotation fixe tandis que le moyen d'entraînement constitue un élément mobile suiveur du pourtour de la table et est d'ailleurs à pignon et à chaîne de ceinturage de la table.

Enfin, il y a lieu de mentionner le brevet DE-A-1 805 131 qui décrit une machine à déposer des cordons de matière plastique dans laquelle l'organe rotatif entraîneur coopère par attraction magnétique avec la piste de guidage du gabarit.

La présente invention a pour objet une réalisation de machine destinée à remplir les fonctions visées en minimisant grandement les inconvénients précités.

En particulier, à cet effet, la machine selon l'invention à déposer un cordon de matière plastique ou analogue sur une surface sensiblement plane d'une pièce, à l'aide d'un pistolet par rapport auquel la pièce est déplacée, comportant un gabarit supporté par la machine et destiné à supporter à sa partie supérieure chaque pièce à traiter en une position donnée, ce gabarit présentant à sa partie inférieure une piste de guidage de contour homologue à celui du cordon à déposer, tandis que sont prévus des moyens d'entraînement et de guidage du gabarit suivant ledit contour, comprenant un organe rotatif entraîneur d'axe fixe à l'aplomb duquel est sensiblement disposé le pistolet de délivrance dudit cordon, est caractérisée par le fait que l'organe rotatif entraîneur coopère par attraction magnétique avec ladite piste de guidage, que le gabarit est monté déplaçable à faible frottement sur une table et est soumis à des moyens de guidage l'empêchant essentiellement de pouvoir tourner sur lui-même tout en lui laissant toute liberté de déplacement sur la table.

En particulier, la piste peut être dentée et l'organe d'entraînement rotatif être un pignon, ou la piste et l'organe d'entraînement peuvent seulement coopérer par adhérence.

Le montage à faible frottement du gabarit sur la table peut être du type à bille ou à coussin d'air.

Les moyens de guidage peuvent être constitués simplement par une barre à coulisse allongée engageant un galet porté par la table ou être constitué par un système articulé du type pantographe ou à double parallélogramme destiné à imposer un déplacement du gabarit et de la pièce parallèlement à eux-mêmes.

Le pistolet peut être simplement monté sur un bras de support mobile entre une position de travail donnée et une position de repos effacée par rapport au gabarit, permettant un changement aisé des pièces, et constituant aussi une position dans laquelle le pistolet peut être immergé dans un gobelet mobile en vue d'empêcher la réticulation du produit en cas d'arrêt d'une certaine durée de la machine.

A titre d'exemple, un tel agencement de machine est d'ailleurs ci-après décrit en référence au dessin annexé, dans lequel :

la figure 1   est une vue en plan de la machine ;

la figure 2   est une vue en élévation de côté de la machine suivant la flèche II de la fig. 1 ;

la figure 3   est une vue partielle en élévation d'un côté de la machine suivant la flèche III de la fig. 1 ;

la figure 4   est une vue de détail des moyens d'entraînement du gabarit porte-pièces.

La machine représentée comprend un bâti principalement composé d'une embase 1 sur laquelle est soudé verticalement un tube 2 maintenu par des goussets 3, et dont la partie supérieure supporte, à l'aide de deux goussets 4, une table 5 sur laquelle est monté déplaçable un gabarit porte-pièces désigné par 6 dans son ensemble et sur lequel on reviendra.

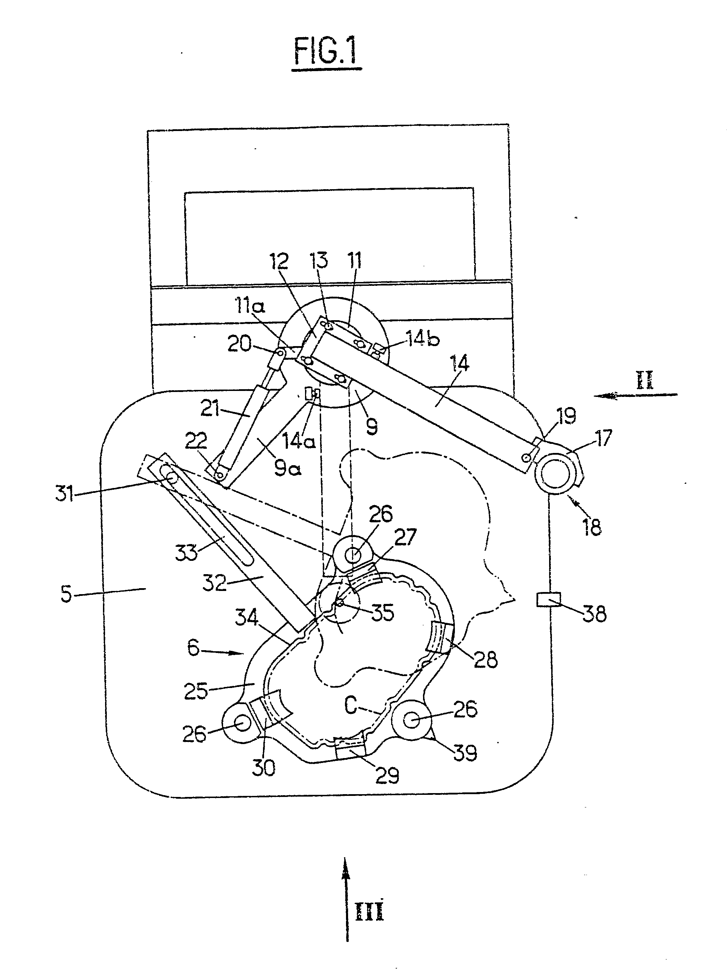

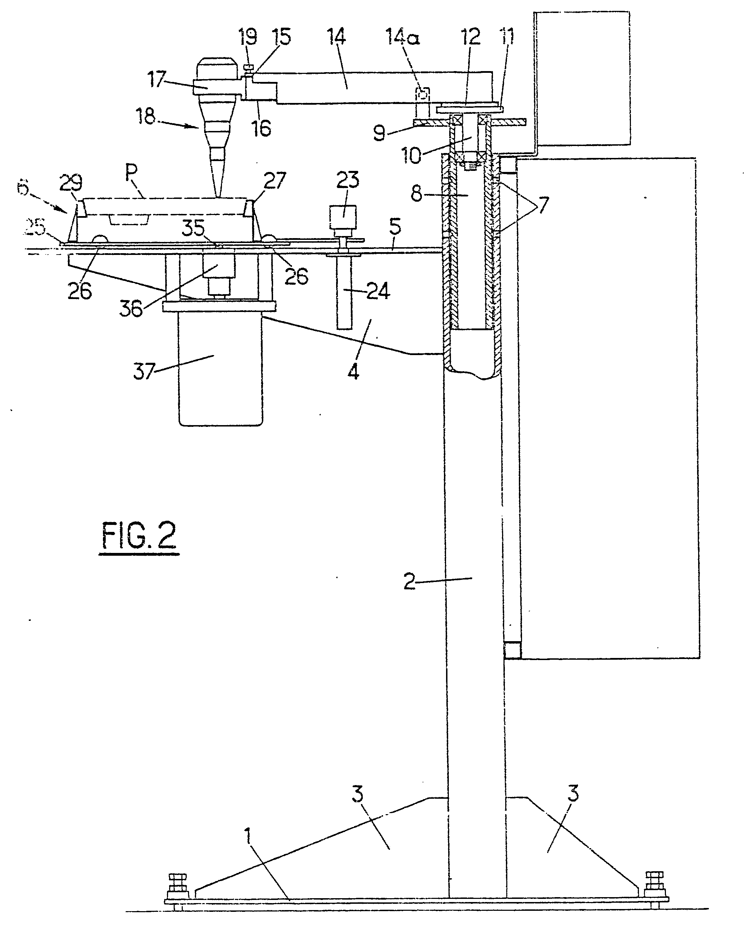

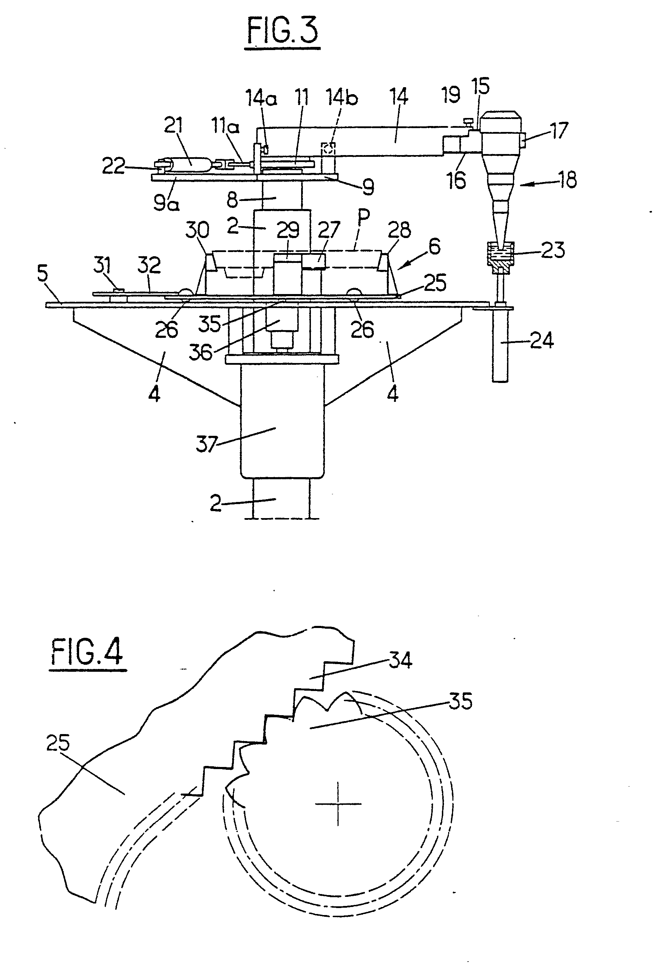

Dans l'extrémité supérieure du tube 2 est monté coulissant et ajustable en hauteur à l'aide de vis 7 un fourreau 8. A l'extrémité supérieure de ce fourreau 8 est soudé un plateau 9 pourvu d'un bras radial 9a. Dans l'extrémité supérieure du fourreau 8 est monté à roulement un tourillon 10 surmonté d'un plateau 11 tournant avec lui. Sur le plateau 11 est monté réglable en position, par l'intermédiaire d'une embase 12 pourvue de quatre boutonnières pour des vis de fixation 13, un bras radial 14 s'étendant en potence au-dessus de la table 5. Ce bras 14 est pourvu à son extrémité libre de deux lames d'acier à ressort 15 et 16 constituant un parallélogramme déformable de support d'un demi-collier 17 de fixation du pistolet 18 de délivrance du cordon de matière plastique. Cette suspension à parallélogramme déformable est destinée à permettre un réglage en hauteur du pistolet à l'aide d'une vis 19 de réglage prenant appui sur le bras 14. Le plateau 11 est pourvu d'un bras radial 11a à l'extrémité duquel est articulée en 20 l'extrémité de la tige de piston d'un vérin 21 dont le cylindre est par ailleurs articulé en 22 à l'extrémité du bras radial 9a du plateau fixe 9. On comprendra déjà que ce vérin 21 permet ainsi de faire passer le bras 14 portant le pistolet 18 entre sa position de repos représentée en trait plein à la fig. 1 et sa position de travail représentée en trait mixte sur la même figure. Dans sa position de repos le pistolet se trouve situé à l'aplomb d'un gobelet 23 supporté par la tige de piston d'un vérin 24 dont le cylindre est fixé verticalement au bord de la table 5. Ce gobelet 23 peut ainsi prendre, comme illustré à la fig. 2, une position basse de niveau inférieur à celle du bec du pistolet, et une position haute, telle qu'illustrée à la fig. 3, pour laquelle il peut venir immerger le bec du pistolet dans de l'huile que contient ce gobelet lorsque le pistolet est appelé à demeurer un certain temps dans sa position de repos. Le gabarit 6 comporte une semelle 25 pourvue de trois patins à billes 26 permettant son déplacement à faible frottement sur la table 5. Ce gabarit comporte des pieds de support de la pièce à traiter ici au nombre de quatre désignée par 27, 28, 29 et 30. Ces pieds sont adaptés pour permettre un positionnement naturel d'immobilisation de la pièce sur eux, mais ils pourraient aussi à cet effet comporter des organes de serrage latéraux. Le gabarit est empêché de tourner sur lui-même et la liberté de mouvement qui lui est autorisée est ainsi réduite à un coulissement ainsi qu'à un pivotement par rapport à un axe 31 supporté par la table 5 et qu'engage une barre 32 à coulisse 33 solidaire de la semelle 25 du gabarit. Le gabarit 6 a le bord interne de sa semelle 25 découpé suivant une piste d'entraînement de contour homologue à celui du cordon de matière plastique à déposer et qui est ici constituée par une piste dentée 34. La semelle 25 est en matière perméable au flux magnétique et la piste 34 est amenée à coopérer par attraction magnétique avec un pignon rotatif 35 monté en position fixe sur la table 5, au-dessus d'un aimant 36 lui-même entraîné par l'arbre de sortie d'un moteur 37, dont le carter est fixé sous la table 5. On comprendra ainsi que lorsque le pistolet 18 est amené à la verticale du pignon 35 et que le gabarit est mis en position de coopération de la piste d'entraînement 34 avec le pignon 35, celui-ci va provoquer le déplacement du gabarit en coopération avec ladite piste dont le contour fermé va suivre le galet roulant à son contact, de sorte que sur un tour de piste le cordon de matière plastique se trouve déposé par le pistolet sur la pièce P suivant un contour homologue de celui de la piste d'entraînement 34. En supposant le pistolet 18 exactement dans l'axe du pignon 35, ce contour se trouve alors défini comme étant celui du tracé primitif de la piste dentée 34, décalé vers l'intérieur de la pièce de la valeur du rayon primitif du pignon 35. Un cycle de dépôt de cordon plastique sur une pièce correspondra donc à un tour d'entraînement de la piste 34 du gabarit par le pignon 35. La position initiale de début de cycle peut être définie à l'aide d'un repère, tel qu'ici le contact de proximité 38, avec lequel coopère un index 39 de la semelle 25 du gabarit suivant la position partiellement représentée en trait mixte de ce dernier à la fig. 1. Le pistolet 18 étant supposé en position de travail, les deux actionnements consécutifs du contact de proximité 38 peuvent ainsi servir à définir le cycle de délivrance du cordon de matière plastique suivant le contour total désiré. Le vérin 21 est actionnable pour permettre l'effacement du bras dans la position représentée à la fig. 1, à la fin de chaque cycle, permettant ainsi un enlèvement facile de la pièce venant d'être traitée et son remplacement par la suivante à traiter. On a représenté ici à titre fictif en C le contour du cordon de matière plastique tel qu'il serait déposé sur une pièce P en fin de cycle et dans le cas d'une piste d'entraînement 34 dont la primitive est par exemple analogue au contour de la pièce P elle-même.

Bien entendu d'autres variantes telles que celles qui ont déjà été évoquées peuvent être apportées à cette réalisation tout en restant dans le cadre de l'invention. L'homme de l'art appréciera le coût et l'encombrement réduit d'une telle machine pour les fonctions qu'elle est à même d'assurer. Le gabarit formant lui-même support de pièce simplifie la structure de machine et la manutention des pièces. L'accès dégagé de la table facilite cette dernière. Le pistolet et son bras à mouvement angulaire constituent un ensemble léger à faible inertie pouvant être rapidement déplacé sans danger à chaque cycle. On peut utiliser sur un même bras plus d'un pistolet, par exemple deux, lorsqu'on veut déposer deux cordons de contour distincts sur une même pièce ou éventuellement sur deux pièces différentes. Le cycle peut ne pas dépendre forcément de l'utilisation d'un repère et contact de proximité mais aussi correspondre par exemple à un nombre de tours prédéterminé du pignon d'entraînement 35 détecté par utilisation d'un moteur pas à pas et d'un compteur ou d'un moteur à courant continu pourvu d'un codeur. Ces remarques ne sont bien entendu pas exhaustives.

## Revendications

1. Machine à déposer un cordon de matière plastique ou analogue sur une surface sensiblement plane d'une pièce (P) à l'aide d'un pistolet (18) par rapport auquel la pièce est déplacée, comportant un gabarit (6) supporté par la machine et destiné à supporter à sa partie supérieure chaque pièce à traiter en une position donnée, ce gabarit (6) présentant à sa partie inférieure une piste de guidage (34) de contour homologue à celui du cordon à déposer, tandis que sont prévus des moyens d'entraînement (37) et de guidage du gabarit suivant ledit contour, comprenant un organe rotatif entraîneur d'axe fixe à l'aplomb duquel est sensiblement disposé le pistolet de délivrance dudit cordon, caractérisé par le fait que l'organe rotatif entraîneur (35) coopère par attraction magnétique avec ladite piste de guidage (34), que le gabarit (6) est monté déplaçable à faible frottement sur une table (5) et est soumis à des moyens de guidage (31, 32, 33) l'empêchant essentiellement de pouvoir tourner sur lui-même tout en lui laissant toute liberté de déplacement sur la table (5).

2. Machine selon la revendication 1, caractérisée en ce que la piste d'entraînement est dentée et l'organe d'entraînement rotatif est un pignon (35).

3. Machine selon la revendication 1, caractérisée en ce que le gabarit repose sur la table (5) par des pieds à billes (26).

4. Machine selon la revendication 1, caractérisée en ce que le gabarit est à sustentation par coussin d'air.

5. Machine selon l'une quelconque des revendications précédentes, caractérisée en ce que les moyens de guidage (31, 32, 33) sont constitués par une barre (32) à coulisse (33) allongée engageant un axe (31) porté par la table (5).

6. Machine selon l'une quelconque des revendications 1 à 4, caractérisé en ce que les moyens de guidage (31, 32, 33) sont constitués par un système articulé du type pantagraphe ou à double parallélogramme destiné à imposer au gabarit et à la pièce un déplacement parallèlement à eux-mêmes.

7. Machine selon l'une quelconque des revendications précédentes caractérisée en ce que le pistolet (18) est monté sur un bras de support (14) mobile entre une position de travail donnée et une position de repos effacée par rapport au gabarit.

8. Machine selon la revendication 7, caractérisée en ce qu'elle comporte un gobelet de liquide (23) mobile en hauteur pour l'immersion de l'extrémité du pistolet en position de repos à partir d'une certaine durée dans cette position.

## Claims

1. A machine for depositing a bead of plastics material or the like on a substantially flat surface of a component (P) by means of a gun (18) with respect to which the component is displaced, comprising a template (6) which is supported by the machine and which is intended to support in its upper part each component to be treated in a given position, said template (6) being provided in its lower part with a guide track (34) whose contour is homologous with respect to that of the bead to be deposited, while there are provided means (37) for driving and guiding the template in accordance with said contour, comprising a rotary drive member having a fixed axis, in substantially vertical alignment with which is disposed the gun for delivering said bead, characterised in that the rotary drive member (35) co-operates by magnetic attraction with said guide track (34), that the template (6) is mounted displaceably with a low level of friction on a table (5) and is subjected to guide means (31, 32, 33) which essentially prevent it from being able to turn about itself, while leaving it full freedom of movement on the table (5).

2. A machine according to claim 1, characterised in that the entrainment track is toothed and the rotary drive member is a pinion (35).

3. A machine according to claim 1, characterised in that the template is supported on the table (5) by ball-type feet (26).

4. A machine according to claim 1, characterised in that the template is supported by an air cushion.

5. A machine according to any one of the preceding claims, characterised in that the guide means (31, 32, 33) comprise a bar (32) having an elongate slideway (33) engaging a spindle (31) carried by the table (5).

6. A machine according to any one of claims 1 to 4, characterised in that the guide means (31, 32, 33) comprise a pivoted system of pantograph or double parallelogram type intended to cause the template and the component to move parallel to themselves.

7. A machine according to any one of the preceding claims, characterised in that the gun (18) is mounted on a support arm (14) movable between a given working position and a rest position of being retracted with respect to the template.

8. A machine according to claim 7, characterised in that it comprises a cup (23) for liquid which is movable in respect of height for immersing the end of the gun in the rest position as from a certain period of time in said position.

## Patentansprüche

1. Vorrichtung zum Aufbringen eines Streifens aus Kunststoff oder kunststoffartigem Material auf eine nahezu ebene Fläche eines Gegenstandes (P) mittels einer Pistole (18), bezüglich der der Gegenstand verschoben wird, mit einer von der Vorrichtung getragenen Schablone (6), die an ihrer Oberseite der Halterung jedes zu behandelnden Gegenstandes in einer vorgegebenen Stellung dient, wobei diese Schablone an ihrer Unterseite eine Führungskurve (34) aufweist, deren Umfangsform gleich derjenigen des anzubringenden Streifens ist, wobei eine An

triebs- und Führungsanordnung (37) für die Schablone entsprechend dieser Umfangsform vorgesehen ist, die ein drehbares Antriebsteil mit fester Achse aufweist, wobei die den Streifen abgebende Pistole beinahe senkrecht zu ihm angeordnet ist, dadurch gekennzeichnet, daß das drehbare Antriebsteil (35) mittels magnetischer Anziehung mit der Führungskurve (34) zusammenwirkt, daß die Schablone (6) mit geringer Reibung verschiebbar an einem Tisch (5) angeordnet ist und einer Führungsanordnung (31, 32, 33) unterworfen ist, die im wesentlichen verhindert, daß sie sich um sich selbst dreht, aber alle Möglichkeiten der Verschiebung auf dem Tisch (5) offenläßt.

2. Vorrichtung nach Anspruch 1, dadurch gekennzeichnet, daß die Führungskurve gezahnt ist und daß das drehbare Antriebsteil ein Ritzel (35) ist.

3. Vorrichtung nach Anspruch 1, dadurch gekennzeichnet, daß sich die Schablone auf dem Tisch (5) über mit Kugeln (26) versehene Füße abstützt.

4. Vorrichtung nach Anspruch 1, dadurch gekennzeichnet, daß die Schablone durch ein Luftkissen Auftrieb erhält.

5. Vorrichtung nach einem der vorhergehenden Ansprüche, dadurch gekennzeichnet, daß die Führungsanordnung (31, 32, 33) aus einer Stange (32) mit langgestreckter Gleitführung (33) besteht, in die eine vom Tisch (5) getragene Achse (31) eingreift.

6. Vorrichtung nach einem der Ansprüche 1 bis 4, dadurch gekennzeichnet, daß die Führungsanordnung (31, 32, 33) aus einem gelenkigen Pantograph-System oder gelenkigen doppelten Parallelogramm-System besteht, das dazu dient, der Schablone und dem Gegenstand eine zueinander parallele Verschiebung zu erteilen.

7. Vorrichtung nach einem der vorhergehenden Ansprüche, dadurch gekennzeichnet, daß die Pistole (18) an einem Haltearm (14) angeordnet ist, der zwischen einer vorgegebenen Arbeitsstellung und einer bezüglich der Schablone zurückgezogenen Ruhestellung beweglich ist.

8. Vorrichtung nach Anspruch 7, dadurch gekennzeichnet, daß sie einen höhenbeweglichen Flüssigkeitsbecher (23) aufweist, zum Eintauchen des Endes der Pistole in Ruhestellung nach einer gewissen Zeitspanne in dieser Stellung.

# FIG.1

FIG.2

## FIG.3

## FIG.4